# EUROPÄISCHE PATENTANMELDUNG

(11) **EP 0 699 470 A1**
(43) Veröffentlichungstag der Anmeldung: **06.03.1996**
(21) Anmeldenummer: 95112911.3
(22) Anmeldetag: 17.08.1995
(51) Int. Cl.: B01D 53/66, B01D 53/86, B01D 53/00

(54) **Verfahren zur Ozoneliminierung aus Gasen und Flüssigkeiten**

(30) Priorität: 01.09.1994 DE 4431139
(71) Anmelder: HOECHST AKTIENGESELLSCHAFT, D-65929 Frankfurt am Main (DE)
(72) Erfinder: von Eysmondt, Jörg, Dr., D-65719 Hofheim (DE); Schleicher, Andreas, Dr., D-65615 Beselich (DE); Frank, Georg, Dr., D-72074 Tübingen (DE)

(57) **Zusammenfassung**

Bei dem Verfahren zur Ozoneliminierung aus Gasen oder Flüssigkeiten werden das zu behandelnde Gas oder die Flüssigkeit in einer ersten Stufe mit einer physikalischen Methode mittels eines Katalysators, thermischer Energie und/oder Strahlungsenergie behandelt und in einer zweiten Stufe mit einem Ozon-bindenden Polymer in Kontakt gebracht wird. Als Ozon-bindendes Polymer werden Polyarylenthioether, Polyarylenether oder makroporöse Copolymere eingesetzt.

## Beschreibung

Die Erfindung betrifft ein Verfahren, bei dem Ozon-haltige Gase oder Flüssigkeiten zunächst durch physikalische Methoden (Katalyse, thermische Spaltung, UV-Licht) vorgereinigt und anschließend durch Kontakt mit einem Ozon-bindenden Polymer restlos von Ozon befreit werden.

Es ist bekannt, daß der Ozongehalt von Gasströmen durch geeignete Katalysatoren auf der Basis anorganischer Oxide/Mischoxide oder thermische Verfahren vermindert werden kann. Auch der Abbau über Aktivkohlen ist bekannt. Alle diese Methoden weisen spezifische Nachteile auf: Katalysatoren auf der Basis von anorganischen Mischoxiden können bei kurzen Gasverweilzeiten im Katalysatorbett keine ausreichende Gasreinigung mehr gewährleisten (DE-A-42 14 282: MnO, Al₂O₃-Gemisch; JP-A-06 015 177, MnO₂/NiO-Gemisch). Hinzu kommt eine meist ausgeprägte Empfindlichkeit gegen hohe Luftfeuchtigkeit und oft unbefriedigende Abbauleistungen bei niedrigen Temperaturen (< 20°C).

Katalysatoren auf Edelmetallbasis (z.B. DE-A-30 03 793, Silber/Mangan/Al₂O₃/Zitronensäure) werden in der Regel schon nach kurzer Zeit durch Spuren von Fremdgasen (z.B. H₂S, SO₂) desaktiviert, so daß für den Betreiber der Anlage ein akutes Sicherheitsrisiko besteht. In der Regel werden diese Katalysatoren nur für Gasströme mit zeitlich konstanter Ozon-Konzentration bei Abwesenheit von Katalysatorgiften eingesetzt. Nachteilig ist zudem der hohe Preis der edelmetallbeschichteten Katalysatoren.

Thermische Verfahren, bei denen die Luftströme auf Temperaturen über 200°C aufgeheizt werden, um Ozon thermisch oder thermisch/katalytisch zu Sauerstoff zu spalten werden in JP-A-60 197 223 und JP-A-60 179 115 beschrieben.

Bei Einsatz von Aktivkohle zur Ozon-Entfernung aus Gasen ist insbesondere bei höheren O₃-Konzentrationen (> 10 ppm) eine hohe Brandgefahr gegeben, da Ozon in hohem Maße brandfördend ist (Römpp Chemie-Lexikon, J. Falbe und M. Regitz (Eds.), 9. Auflage, Band 4, Stichwort "Ozon", Georg Thieme Verlag, Stuttgart-New York 1991, S. 3185). Schwermetall imprägnierte Aktivkohlen müssen darüberhinaus nach Gebrauch als Sondermüll entsorgt werden.

Weiterhin ist bekannt, daß Ozon UV-Licht (insbesondere bei Wellenlängen von 254 nm) absorbiert und zu Sauerstoff gespalten wird (JP-A-04 035 667). Bei der Behandlung Ozon-haltiger Gasströme, insbesondere bei schwankender O₃-Konzentration, erwies sich die UV-Methode zwar als unempfindlich, aber nur beschränkt leistungsfähig. Ein Ozon-Abbau auf Werte < 0,1 ppm ist nur mit hohem technischen Aufwand realisierbar, insbesondere bei hohen Gas-Volumenströmen. Zudem ist die Lebensdauer von UV-Lampen begrenzt, so daß neben hohen Energiekosten auch mit weiteren Betriebskosten für den Austausch der Lampen zu rechnen ist.

Allen genannten physikalischen Methoden ist gemeinsam, daß der technische und damit kostenmäßige Aufwand zur Eliminierung von Ozon aus Abluft exponentiell mit dem Aufwand zur Verminderung des Ozongehalts ansteigt. Die Steigerung der Abbauleistung von 95 % auf über 99,9 % führt in der Regel zu einer Verdoppelung oder gar Verdreifachung der Abluftbehandlungskosten.

Aufgrund der hohen Toxizität des Ozons liegen dessen MAK-Werte mit 0,2 mg/m³ (0,1 ppm) extrem niedrig. Bei technischen Prozessen werden jedoch durchaus Abgaskonzentrationen von 10 bis 10000 mg Ozon/m³ gemessen, was hohe Anforderungen an die Abbauleistung entsprechender Abluftreinigungssysteme stellt. Als Abbauleistung für Ozon wird teilweise mehr als 99,99 % gefordert.

Die Aufgabe der Erfindung war es, ein Verfahren zu finden, das Ozon aus Gasen entfernt und wirtschaftlich (kostengünstig) einsetzbar ist.

Es wurde gefunden, das eine Kombination bekannter physikalischer Methoden zur Ozon-Entfernung aus Gasen, hier als Grobreinigung eingesetzt, mit einem Verfahren zur Ozonbeseitigung, das Ozon-bindende Polymere verwendet, zu einem sehr leistungsfähigen und kostengünstigen Verfahren zur Ozon-Eliminierung aus Gasen oder Flüssigkeiten führt.

Die Erfindung betrifft somit ein Verfahren zur Ozoneliminierung aus Gasen oder Flüssigkeiten, in dem das zu behandelnde Gas oder die zu behandelnde Flüssigkeit zur Entfernung von Ozon zunächst mit einer physikalischen Methode behandelt und dann mit einem Ozon-bindenden Polymer in Kontakt gebracht wird.

Das Verfahren gemäß der Erfindung betrifft die Behandlung Ozon-haltiger Gase oder Flüssigkeiten, vorzugsweise Ozon-haltiger Gase.

Physikalische Methoden sind Verfahren, die das Ozon katalytisch, thermisch oder strahlungsinduziert abbauen. Diese Verfahren und die einzusetzenden Materialien und Geräte sind bekannt. Die termische Behandlung erfolgt im allgemeinen bei Temperaturen von 200 bis 300°C, vorzugsweise bei 230 bis 260°C. UV-Strahlung hat sich ebenfalls bewährt. Hier ist besonders die Wellenlänge von 253,7 nm geeignet. Bei den Methoden der ersten Stufe erfolgt ein Abbau des Ozons im allgemeinen 90 bis 99 %.

Im Gas vorhandene Verunreinigungen wie SO₂, NO₂, Kohlenwasserstoffe, H₂S, CO, Partikel und Luftfeuchte sind für das Verfahren gemäß der Erfindung im allgemeinen nicht störend. Es ist daher vorteilhaft, wenn in diesem Fall die physikalische Methode (erste Stufe des Verfahrens) als thermische Behandlung ausgelegt ist.

Auch bei hohen Ozonkonzentrationen in Gasen wird die Ozon-Eliminierung quantitativ durchgeführt, da mit physikalischen Methoden im allgemeinen etwa 90 bis 99 % des Ozons abgebaut werden. Der verbleibende Rest von Ozon wird durch den Kontakt des Gases mit Ozon-bindendem Polymer beseitigt. Natürlich ist die Abbauleistung des Verfahrens abhängig von der Leistungsfähigkeit und Dimensionierung der physikalischen Methode und der Menge beziehungsweise Kapazität des Ozon-bindenden Polymers.

Als physikalische Methode zur Behandlung ozon-haltiger Flüssigkeiten eignet sich besonders der Einsatz von Katalysatoren oder UV-Bestrahlung.

In der zweiten Stufe des Verfahrens gemäß der Erfindung wird durch Kontakt mit dem Ozon-bindenden Polymer das im Gas oder der Flüssigkeit noch vorhandene Ozon restlos abgebaut, d.h. bis auf weniger als 10 µg/m³.

Ozon-bindende Polymere sind beispielsweise schwefelhaltige Polymere, Polyarylenether oder polymere Adsorbentien.

Polyarylenether bezeichnen Polymere, die Arylenether-Einheiten enthalten. Als Polyarylenether wird 2,6-Dimethyl-Polyphenylenoxid bzw. 2,6-Dimethyl-Polyphenylenether (zu Eigenschaften und Herstellung siehe Ullmann's Encyclopedia of Industrial Chemistry, Vol. A21, 5. Auflage, B. Elvers, S. Hawkins und G. Schulz (Eds.), VCH Publishers, Weinheim-New York 1992, S. 605 ff.) bevorzugt verwendet.

Der Ausdruck schwefelhaltige Polymere umfaßt Polymere, die mindestens eine Arylenthioether-Einheit (-Ar-S-; Ar: Arylen) oder eine aliphatische Thioether-Einheit (-Alk-S-; Alk: Alkylen) enthalten, z.B. Polyarylenthioether oder Polysulfide. Die Arylengruppen können aus ein- oder mehrkernigen Aromaten bestehen. Die Arylengruppen bestehen aus mindestens einem fünf- oder sechsgliedrigen Ring, der ein oder mehrere Heteroatome enthalten und gegebenenfalls substituiert sein kann. Heteroatome sind z.B. Stickstoff oder Sauerstoff, Substituenten sind z.B. lineare oder verzweigte Alkylgruppen. Die schwefelhaltigen Polymere können außer Schwefelbrücken (-S-) auch Sulfoxidgruppen (-SO-) oder Sulfongruppen (-SO₂-) enthalten. Arylene sind beispielsweise Phenylen, Biphenylen (-C₆H₄-C₆H₄-) oder Naphthylen, die ein- oder mehrfach substituiert sein können. Substituenten sind z.B. geradkettige, cyclische oder verzweigte C₁-C₂₀-Kohlenwasserstoffreste, wie C₁-C₁₀-Alkylreste, z.B. Methyl, Ethyl, n-Propyl, iso-Propyl, n-Butyl, t-Butyl oder n-Hexyl, oder C₆-C₁₄-Arylreste, z.B. Phenyl oder Naphtyl; Halogenid-, Sulfonsäure-, Amino-, Nitro-, Cyano-, Hydroxy-, oder Carboxylgruppen.

Die Synthese von sulfongruppenhaltigen Polyarylenthioethern ist in Chimia 28(9), (1974) 567 beschrieben.

Polyphenylensulfid (abgekürzt PPS; Eigenschaften und Herstellung siehe "Ullmann's Encyclopedia of Industrial Chemistry", Volume A21, B. Elvers, S. Hawkins und G. Schulz (Eds.), VCH, Weinheim-New York 1992, S. 463 ff) wird als schwefelhaltiges Polymer bevorzugt verwendet. Die Arylengruppen im PPS können 1,4- und/oder 1,3-Verknüpfungen aufweisen. PPS bezeichnet sowohl das lineare als auch das vernetzte Polymer. Ferner kann PPS pro Arylengruppe unabhängig voneinander 1 bis 4 funktionelle Gruppen enthalten, z.B. Alkylreste, Halogene, Sulfonsäure-, Hydroxy-, Amino-, Nitro-, Cyano- oder Carboxygruppen.

Polymere Adsorbentien sind Polymere mit einer besonders großen Oberfläche. Solche Polymere sind zum Beispiel sogenannte Adsorberharze, die in der Technik verbreiteten Einsatz finden. Als Adsorberharze werden makroporöse oder makroretikulare Copolymere auf Basis Styrol/Divinylbenzol mit variierendem Vernetzungsgrad eingesetzt. Adsorberharze können auch aus Copolymeren auf Basis von Methacrylat/Ethylenglykol bestehen.

Polymere Adsorbentien können beispielsweise aus Copolymeren bestehen oder Copolymere enthalten, die Struktureinheiten der Formel I 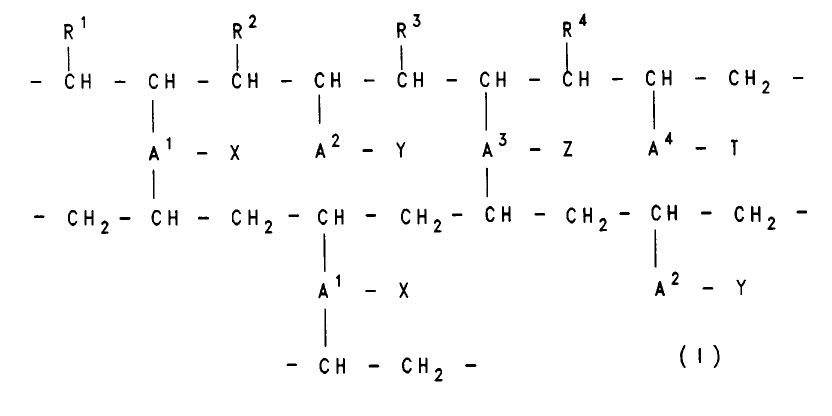
oder der Formel II 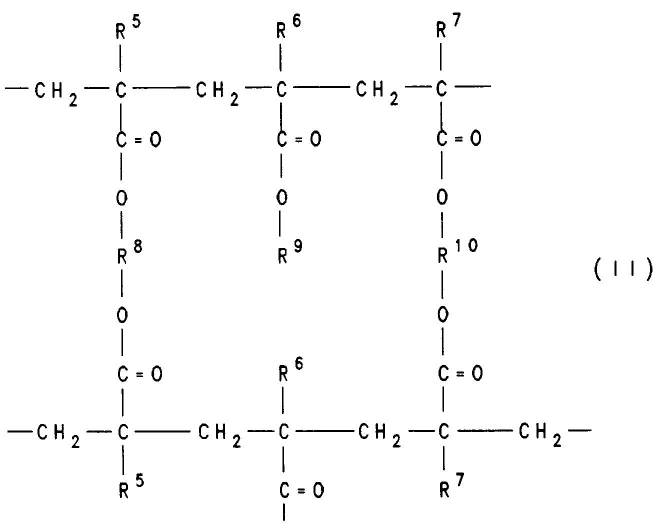
enthalten, worin A¹, A², A³, A⁴, X, Y, Z und T gleich oder verschieden sind und substituierte oder unsubstituierte Arylensysteme mit insgesamt 6 bis 18 C-Atomen bedeuten, R¹ bis R⁷ und R⁹ gleich oder verschieden sind und ein Wasserstoffatom oder eine Alkylgruppe mit 1 bis 20 C-Atomen, eine Hydroxygruppe oder ein Halogenatom bedeuten und R⁸ und R¹⁰ unabhängig voneinander eine C₂ - C₁₀ -Alkylengruppe sind, besteht.

Die Kombination der beiden Verfahren gemäß der Erfindung stellt eine ideale Ergänzung dar, da die physikalischen Methoden am kostengünstigsten im mittleren bis oberen Ozon-Konzentrationsbereich arbeiten, während die Ozon-Entfernung mit einem Ozon-bindenden Polymer in erster Linie bei niedrigen Ozon-Konzentrationen unter minimalen Kosten arbeitet, da das Ozon-bindende Polymer bei der Ozon-Entfernung verbraucht wird. Dies bedeutet aber auch, daß bei hoher geforderter Reinigungsleistung das Kombinationsverfahren kostengünstiger und zuverlässiger arbeitet als wenn nur ein Teilverfahren (pysikalische Methode oder Ozon-Entfernung mit Ozon-bindendem Polymer) allein angewendet würde. Die benötigten Mengen an Katalysatoren bzw. Energie (thermische Spaltung) können infolge der nachgeschalteten Feinreinigung durch Ozon-Entfernung mit Ozon-bindendem Polymer minimal gehalten werden.

Dessen ungeachtet erlaubt der Einsatz von Ozon-bindendem Polymer auch den quantitativen Abbau sehr hoher Ozon-Konzentrationen, z.B. bei Ausfall der physikalischen Methode, nur werden hierdurch die Standzeiten des Ozon-bindenden Polymers reduziert. Das Ozon-bindende Polymer wirkt dann als Sicherheits-Filter, das auch bei niedrigen Temperaturen, hohen Anteilen an Schadgasen (H₂S, SO₂, Kohlenwasserstoffe, Ozon) und schwankenden Betriebsbedingungen (Volumenstrom, Konzentration) eine sichere Ozon-Eliminierung über einen bestimmten Zeitraum gewährleistet.

Mit dem Verfahren gemäß der Erfindung lassen sich, wie schon erwähnt, hohe Ozonkonzentrationen abbauen. Im allgemeinen liegen diese Konzentrationen in Gasströmen in Mengen von 0,1 bis 100 000 mg/m³.

Das erfindungsgemäße Verfahren arbeitet gewöhnlich bei Temperaturen der Gase oder Flüssigkeiten im Bereich von minus 10 bis 150°C, vorzugsweise bei 10 bis 60°C.

Die Ozon-bindenden Polymere können als Pulver, Granulat, Faser, Vlies, Filz, Gewebe, Folie, gesintertes Material, Schaum, Formkörper oder als Beschichtung oder Imprägnierung von Trägermaterialien eingesetzt werden. Insbesondere sind Formkörper mit besonders großer Oberfläche, z. B. mit Gitter- oder Wabenstruktur, geeignet. Die Pulver besitzen z.B. handelsübliche Teilchengrößen, wobei auch Granulate verwendbar sind. Wichtig hierbei ist es, daß das zu behandelnde Gas oder die Flüssigkeit durch das Polymermaterial, beispielsweise in Form eines Pulver-Festbettes, ohne Störung durchgeleitet werden kann. Werden die Polymere als Fasern verwendet, können diese als Stapelfasern, Nadelfilz, "non woven" Material, Kardenband oder Gewebe eingesetzt werden. Auch Folien oder Folienschnipsel können in geeigneter Form Verwendung finden.

Die Ozon-bindenden Polymere sollten in einer Form mit möglichst großer Oberfläche vorliegen um eine optimale Filterwirkung entfalten zu können. Beschichtungen von Trägermaterialien mit Ozon-bindendem Polymer wie Polyphenylensulfid oder 2,6-Dimethyl-Polyphenylenoxid können durch Auftragen von Lösungen des schwefelhaltigen Polymers auf das Trägermaterial erhalten werden. Imprägnierungen werden z.B. durch Tränken eines saugfähigen Trägermaterials hergestellt. Als Trägermaterial werden im allgemeinen anorganische Stoffe wie Glas, Kieselgel, Aluminiumoxid, Sand, keramische Massen, Metall und organische Stoffe wie Kunststoffe eingesetzt. Auch eignen sich offenporige Schäume oder Materialien mit großer Oberfläche als Trägermaterial für Ozon-bindende Polymere.

Auf die Ozon-bindenden Polymere können auch z.B. Metalle, insbesondere Edelmetalle und Übergangsmetalle, oder Metalloxide wie Übergangsmetalloxide, beispielsweise durch Aufimprägnieren aufgebracht werden, die dann z.B. in Form kleiner Cluster vorliegen.

Das Ozon-bindende Polymer kann im allgemeinen als unverschnittenes Material eingesetzt werden. Möglich ist aber auch der Zusatz von üblichen Füllstoffen, wie Kreide, Talk, Ton, Glimmer, und/oder faserförmigen Verstärkungsmitteln, wie Glas- und/oder Kohlenstoffasern, Whiskers, sowie weiteren üblichen Zusatzstoffen und Verarbeitungshilfmitteln, z.B. Gleitmittel, Trennmittel, Antioxidantien, UV-Stabilisatoren.

Die Kontaktzeiten der Ozon-bindenden Polymere richten sich nach den Verfahrensbedingungen wie Strömungsgeschwindigkeit des zu reinigenden Gases, Temperatur etc. Im allgemeinen sind Zeiten von 0,01 bis 60 Sekunden, vorzugsweise 0,02 bis 2 Sekunden ausreichend, wobei die linearen Anströmgeschwindigkeiten im allgemeinen 0,02 bis 2 m/sec, vorzugsweise 0,05 bis 0,5 m/sec betragen. Diese Werte können natürlich entsprechend den Betriebsbedingungen variiert werden.

Die zu behandlenden Gase umfassen beliebige Gase oder Gasgemische, wie Sauerstoff, Luft, Abluft, Inertgase.

Die zu behandelnden Flüssigkeiten sind beispielsweise wäßrige Flüssigkeiten.

Das Verfahren gemäß der Erfindung ist äußerst flexibel einsetzbar, sehr zuverlässig, unempfindlich und darum insbesondere geeignet für
- Gaströme mit mittleren und hohen Ozonkonzentrationen (5 bis 50000 ppm)
- Gasströme mit zeitlich schwankenden Ozonkonzentrationen, Temperaturen und Gaszusammenstzungen
- mittlere bis hohe Volumenströme (5 bis 50000 m³/h)
- Gase, die neben Ozon noch andere Schadstoffe enthalten (z.B. SO₂, NO₂, Kohlenwasserstoffe, H₂S, CO, Partikel, Luftfeuchte etc.)
Die beschriebenen Gasströme treten insbesondere bei der Abwasser-, Brauchwasser- und Trinkwasserbehandlung auf oder bei chemisch-technischen Herstellverfahren unter Verwendung von Ozon als modernem Oxidationsmittel (Bleichprozesse, Synthesen etc.). Ein weiteres Anwendungsgebiet stellt die Corona-Behandlung von Folien dar, wobei relativ große Volumenströme von Ozon-haltiger Abluft entstehen.

Das erfindungsgemäße Verfahren bietet folgende Vorteile:
- sichere Ozon-Verminderung unter allen Betriebsbedingungen
- Verminderung von Ozon auf Werte unterhalb 1 ppb (0,001 ppm)
- geeignet für mittlere bis hohe Ozonkonzentrationen
- geeignet für Gasströme mit zeitlich schwankenden Ozonkonzentrationen, Temperaturen und Gaszusammensetzungen
- geeignet für mittlere bis hohe Volumenströme
- geeignet für Gase, die neben Ozon noch andere Schadstoffe enthalten (z.B. SO₂, NO₂, Kohlenwasserstoffe, H₂S, CO, Partikel, Luftfeuchte etc.)
- kostengünstige Arbeitsweise, lange Standzeiten.

Das Verfahren gemäß der Erfindung ist auch diskontinuierlich durchführbar. Beispielsweise kann ein Gas oder eine Flüssigkeit zunächst in einem Behälter mit einer physikalischen Methode behandelt werden, dem dann Ozon-bindendes Polymer zugeführt wird oder der Kontakt mit einem Ozon-bindenden Polymer in einem anderen Behälter stattfindet. Bei Flüssigkeiten kann die Behandlung mit Ozon-bindendem Polymer zum Beispiel durch Rühren der Flüssigkeit mit Polymerpulver (Ausrühren) erfolgen oder dadurch, daß man die Flüssigkeit über eine mit Polymerpulver gefüllte Säule fließen läßt.

### Beispiele:

### Versuchsbedingungen:

Ozon wurde mit einem handelsüblichen Ozon-Generator der Fa. Fischer Labor- und Verfahrenstechnik GmbH, Bonn, in Sauerstoff oder Luft erzeugt. Das Ozonhaltige Gas diente als Versuchsgas, das von Ozon zu befreien war.

Als physikalische Methode zur Ozon-Zersetzung wurden Katalysatoren (Beispiele 1 und 2), ein thermisches Verfahren (Beispiel 3) und UV-Bestrahlung (Beispiel 4) eingesetzt. Die Katalysatoren bestanden aus MnO₂-Granulat oder Hopkalit-Granulat. In dem thermischen Verfahren wurde ein beheiztes Edelstahlrohr mit einem Innendurchmesser von 4mm und einer Länge von 50 cm verwendet. Die UV-Bestrahlung wurde mit einer UV-Lampe (Quecksilber-Niederdruck UV-Strahler, Typ TNN 1532, 15 Watt, Fa. Heraeus, Hanau) durchgeführt. Die UV-Lampe wurde in ein Glasrohr eingebaut, das von dem Versuchsgas durchströmt wurde.

Als Ozon-bindendes Polymer diente Polyphenylensulfid (PPS), das als Pulver mit einer Korngröße von 0,1 bis 1 mm eingesetzt wurde.

Als Aufnahmebehältnisse für die Katalysatoren oder das Ozon-bindende Polymer wurden Glasrohre mit 2 cm Innendurchmesser und 5 bis 20 cm Länge verwendet. An den Enden eines Glasrohres befanden sich Glasfritten zur Vermeidung des Austrages von im Glasrohr enthaltenen Material.

Das Ozonhaltige Gas (Sauerstoff oder Luft) wurde in einer ersten Stufe zur Ozon-Grobreinigung mit einer physikalischen Methode und in einer zweiten Stufe (Rest-Ozon-Beseitigung) mit einem Ozon-bindendem Polymer (PPS) behandelt. Die Versuchsbedingungen sind im einzelnen in Tabelle 1 aufgeführt. Die Ergebnisse der Beispiele 1 bis 4 (Tabelle 1) zeigen, daß nach Passage der Ozon-Reinigungsstufen das Gas sehr effektiv von Ozon befreit wurde.

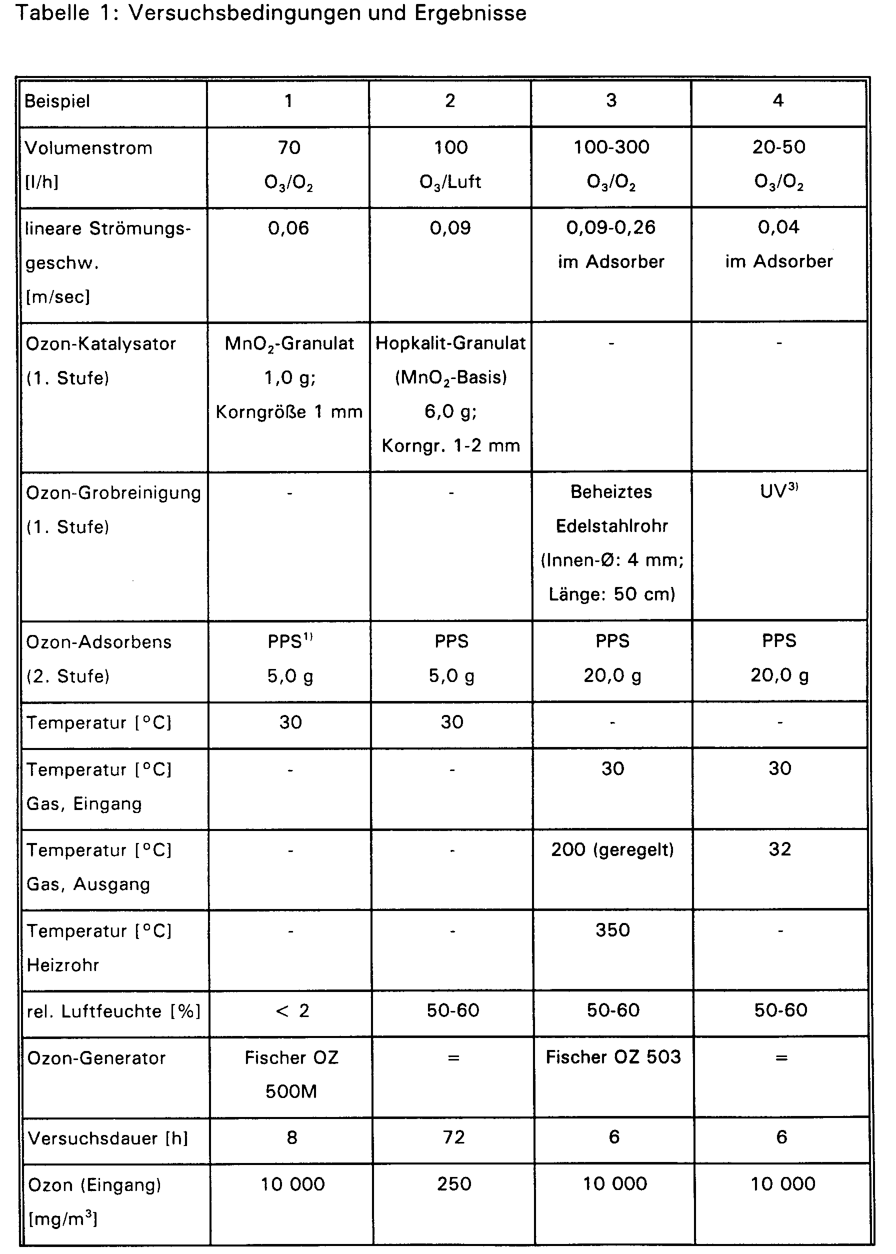

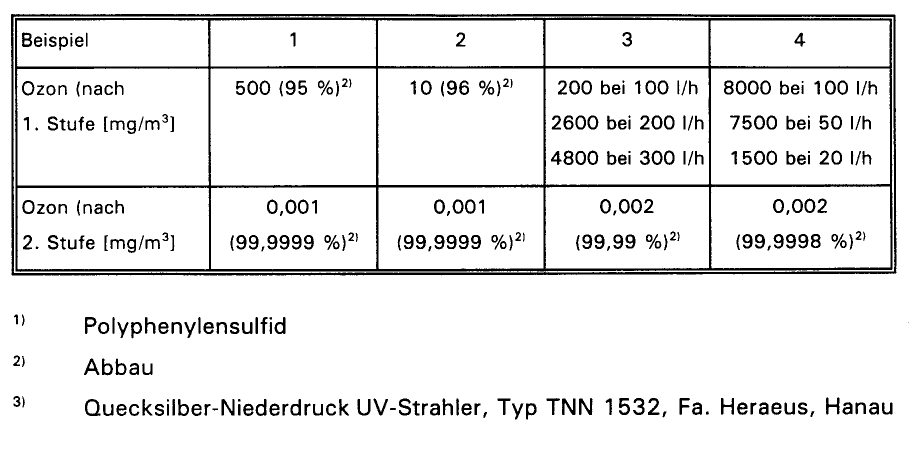

## Patentansprüche

1. Verfahren zur Ozoneliminierung aus Gasen oder Flüssigkeiten, dadurch gekennzeichnet, daß das zu behandelnde Gas oder die zu behandelnde Flüssigkeit zur Entfernung von Ozon zunächst mit einer physikalischen Methode behandelt und dann mit einem Ozon-bindenden Polymer in Kontakt gebracht wird.

2. Verfahren nach Anspruch 1, dadurch gekennzeichnet, daß in der physikalischen Methode ein Katalysator, thermische Energie und/oder Strahlungsenergie eingesetzt werden.

3. Verfahren nach Anspruch 1 oder 2, dadurch gekennzeichnet, daß Strahlungsenergie mit einer Wellenlänge von 253,7 nm eingesetzt wird.

4. Verfahren nach Anspruch 1, dadurch gekennzeichnet, daß als Ozonbindendes Polymer Polyarylenthioether, Polyarylenether oder makroporöse Copolymere eingesetzt werden.

5. Verfahren nach Anspruch 1, dadurch gekennzeichnet, daß bei Ozon-Konzentrationen im zu behandelnden Gas im Bereich von 0 bis 100000 mg/m³ gearbeitet wird.

6. Verfahren nach Anspruch 1, dadurch gekennzeichnet, daß bei Ozon-Konzentrationen im zu behandelnden Gas im Bereich von 5 bis 10000 mg/m³ gearbeitet wird.

7. Verfahren nach Anspruch 1, dadurch gekennzeichnet, daß bei Temperaturen des Gases oder der Flüssigkeit im Bereich von minus 10 bis 150°C gearbeitet wird.

8. Verfahren nach Anspruch 1, dadurch gekennzeichnet, daß bei Temperaturen des Gases oder der Flüssigkeit im Bereich von 10 bis 60°C gearbeitet wird.
